# EUROPEAN PATENT SPECIFICATION

(11) **EP 4 184 230 B1**
(45) Date of publication and mention of the grant of the patent: **11.03.2026**
(21) Application number: 21842593.2
(22) Date of filing: 12.07.2021
(51) Int. Cl.: G02B 7/198, F21V 23/00, F21Y 115/10, F21Y 115/20, F21Y 115/30, F21S 2/00, F21V 14/04, F21S 41/675, F21W 102/14, F21S 41/32, F21S 41/37, F21S 41/39, F21S 45/10, G02B 27/18, G02B 19/00, G02B 26/08, G02B 7/18

(54) **LIGHT REFLECTION DEVICE, SENSOR DEVICE, AND LIGHTING DEVICE**
LICHTREFLEXIONSVORRICHTUNG, SENSORVORRICHTUNG UND BELEUCHTUNGSVORRICHTUNG
DISPOSITIF DE RÉFLEXION DE LUMIÈRE, DISPOSITIF DE CAPTEUR ET DISPOSITIF D'ÉCLAIRAGE

(30) Priority: 15.07.2020 JP 2020121504; 15.07.2020 JP 2020121505
(43) Date of publication of application: 24.05.2023
(73) Proprietor: KOITO MANUFACTURING CO., LTD., Minato-ku, Tokyo, 108-8711 (JP)
(72) Inventor: INOUE Hiroshi, Shizuoka-shi, Shizuoka 424-8764 (JP)
(74) Representative: Cabinet Beau de Loménie
(86) International application number: PCT/JP2021/026145
(87) International publication number: WO 2022/014532

(56) References cited:
- EP-A1- 0 484 938
- FR-A1- 2 800 336
- JP-A- 2014 010 332
- JP-A- 2020 506 437
- JP-A- H0 829 715
- JP-A- H1 164 764
- KR-B1- 102 044 254
- US-A- 5 915 063
- US-A1- 2014 151 726
- US-B1- 6 550 947

## Description

### Field

The presently disclosed subject matter relates to a light reflecting device configured to reflect light emitted from a light source in a desired direction. The presently disclosed subject matter also relates to each of a sensor device and a lighting device including the light reflecting device.

### Background

Patent Document 1 discloses a MEMS mirror as an example of a light reflecting device adapted to be equipped in a vehicle lamp that is an example of a lighting device. The MEMS mirror is configured to be able to change a reflecting direction of light emitted from a laser light source. By the on/off control of the laser light source in accordance with the reflecting direction of the MEMS mirror, a desired light distribution pattern is formed outside the vehicle.

Publication FR 2 800 336 A1 discloses a vehicle headlamp comprising a housing, a reflector receiving a lamp, a movable rod with a ball end, and a mechanism for adjusting the position of the rod. The movable rod is connected to the reflector so as to move it when displaced by the adjustment mechanism. A spring element is provided to pull the reflector towards the rear of the headlamp, thereby maintaining pressure of the reflector against the ball end of the movable rod. Various embodiments are described, including configurations where the elastic element operates in traction or compression, and where the housing comprises an opening for receiving an adjustment corrector carrying the movable rod. The corrector may include a motor and electrical connector for power supply.

Further light reflecting devices are known from US 2014/151726 A1, KR 102 044 254 B1, EP 0 484 938 A1, US 6 550 947 B1, JP 2014-010332 A, US 5 9015 063 and JP H11 64764 A.

### Citation List

### Patent Document

Patent Document 1: Japanese Patent Publication No. 2020-057511 A

### Summary

### Technical Problem

It is demanded to suppress the occurrence of a situation where the traveling direction of the reflected light deviates from a desired direction due to a thermal change in an environment.

### Solution to Problem

In order to meet the demand described above, the invention provides a light reflecting device as defined in independent claim 1.

A thermal change of the environment in which the light reflecting device according to independent claim 1 is disposed may cause deformation of each of the light reflecting member and the arm member. Strain stress that may occur as a result of the deformation is likely to concentrate at a position where the arm member is bonded to the light reflecting member. However, by forming the thick portion so that the distance from the mirror face is increased at such a position, the strain stress can be made difficult to reach the mirror face. In other words, since it is easy to suppress the occurrence of strain in the mirror face caused by the thermal change of the environment, it is possible to suppress the occurrence of a situation where the traveling direction of the light reflected by the mirror face deviates from a desired direction due to the thermal change of the environment.

In order to meet the demand described above, the invention further provides a light reflecting device as defined in independent claim 3.

A thermal change of the environment in which the light reflecting device according to independent claim 3 is disposed may cause deformation of each of the light reflecting member, the supporting member, and the arm member. Strain stress that may occur as a result of the deformation is likely to concentrate on a junction between the light reflecting member and the supporting member that is restricted in a narrow region. However, by forming the protrusion so that the distance to the mirror face is increased at such a position, the strain stress can be made difficult to reach the mirror face. In other words, since it is easy to suppress the occurrence of strain in the mirror face caused by the thermal change of the environment, it is possible to suppress the occurrence of a situation where the traveling direction of the light reflected by the mirror face deviates from a desired direction due to the thermal change of the environment.

In order to meet the demand described above, a sensor device according to claim 11 is provided.

As described above, since the strain in the mirror face of the light reflecting member caused by the thermal change of the environment is suppressed, it is also possible to suppress degradation in the detection accuracy of the object by the sensor device using the mirror face.

In order to meet the demand described above, a lighting device according to claim 13 is provided.

As described above, since the strain in the mirror face of the light reflecting member caused by the thermal change of the environment is suppressed, it is also possible to suppress degradation in the accuracy as to the position and shape of the light distribution pattern formed by the lighting device using the mirror face.

### Brief Description of Drawings

FIG. 1 illustrates a configuration of a light reflecting device according to a first embodiment, not forming part of the claimed invention.
FIG. 2 illustrates a configuration of the light reflecting device according to the first embodiment.
FIG. 3 illustrates an operation performed by the light reflecting device according to the first embodiment.
FIG. 4 illustrates a configuration of a light reflecting device according to a second embodiment, not forming part of the claimed invention.
FIG. 5 illustrates an exemplary configuration of a light reflecting device according to a third embodiment, the configuration not forming part of the claimed invention.
FIG. 6 illustrates another exemplary configuration of the light reflecting device according to the third embodiment, the configuration not forming part of the claimed invention.
FIG. 7 illustrates another exemplary configuration of the light reflecting device according to the third embodiment.
FIG. 8 illustrates another exemplary configuration of the light reflecting device according to the third embodiment.
FIG. 9 illustrates another exemplary configuration of the light reflecting device according to the third embodiment.
FIG. 10 illustrates an exemplary configuration of a light reflecting device according to a fourth embodiment.
FIG. 11 illustrates another exemplary configuration of the light reflecting device according to the fourth embodiment.
FIG. 12 illustrates another exemplary configuration of the light reflecting device according to the fourth embodiment.
FIG. 13 illustrates a housing that may be provided with the light reflecting device according to each of the first to fourth embodiments.
FIG. 14 illustrates a configuration of a cross section XIV in FIG. 13 as viewed from an arrowed direction.
FIG. 15 illustrates a configuration of a cross section XV in FIG. 13 as viewed from an arrowed direction.
FIG. 16 illustrates a configuration of a sensor device that may be equipped with the light reflecting device according to each of the first to fourth embodiments.
FIG. 17 illustrates a configuration of a lighting device that may be equipped with the light reflecting device according to each of the first to fourth embodiments.
FIG. 18 illustrates a vehicle that may be equipped with the sensor device of FIG. 16 and the lighting device of FIG. 17.
FIG. 19 illustrates a configuration of a light reflecting device according to a fifth embodiment.
FIG. 20 illustrates a configuration of the light reflecting device according to the fifth embodiment.
FIG. 21 illustrates an operation performed by the light reflecting device according to the fifth embodiment.
FIG. 22 illustrates a configuration of a light reflecting device according to a sixth embodiment.
FIG. 23 illustrates an exemplary configuration of a light reflecting device according to a seventh embodiment, the configuration not forming part of the claimed invention.
FIG. 24 illustrates another exemplary configuration of the light reflecting device according to the seventh embodiment, the configuration not forming part of the claimed invention.
FIG. 25 illustrates another exemplary configuration of the light reflecting device according to the seventh embodiment.
FIG. 26 illustrates another exemplary configuration of the light reflecting device according to the seventh embodiment.
FIG. 27 illustrates another exemplary configuration of the light reflecting device according to the seventh embodiment.
FIG. 28 illustrates an exemplary configuration of a light reflecting device according to an eighth embodiment.
FIG. 29 illustrates an exemplary configuration of a light reflecting device according to the eighth embodiment.
FIG. 30 illustrates an exemplary configuration of a light reflecting device according to the eighth embodiment.
FIG. 31 illustrates a configuration of a sensor device that may be equipped with the light reflecting device according to each of the fifth to eighth embodiments.
FIG. 32 illustrates a configuration of a lighting device that may be equipped with the light reflecting device according to each of the fifth to eighth embodiments.

### Description of Embodiments

Examples of embodiments will be described below in detail with reference to the accompanying drawings. In each of the drawings used in the following descriptions, the scale is appropriately changed in order to make each item have a recognizable size.

In the accompanying drawings, an arrow F represents a forward direction of the illustrated structure. An arrow B represents a rearward direction of the illustrated structure. An arrow L represents a leftward direction of the illustrated structure. An arrow R represents a rightward direction of the illustrated structure. An arrow U represents an upward direction of the illustrated structure. An arrow D represents a downward direction of the illustrated structure. The expressions related to these directions are used for convenience of explanation, and are not intended to limit the directions or postures in actual use of the illustrated structure.

As used herein for the two entities A and B, the expression "at least one of A and B" comprehends a case where only A is specified, a case where only B is specified, and a case where both A and B are specified. Each of the entities A and B may be a single entity or a plurality of entities unless otherwise mentioned.

As used herein for the three entities A, B, and C, the expression "at least one of A, B, and C" comprehends a case where only A is specified, a case where only B is specified, a case where only C is specified, a case where A and B are specified, a case where B and C are specified, a case where A and C are specified, and a case where all of A, B, and C are specified. Each of the entities A, B, and C may be a single entity or a plurality of entities unless otherwise mentioned. The same applies to a case where there are four or more entities to be described.

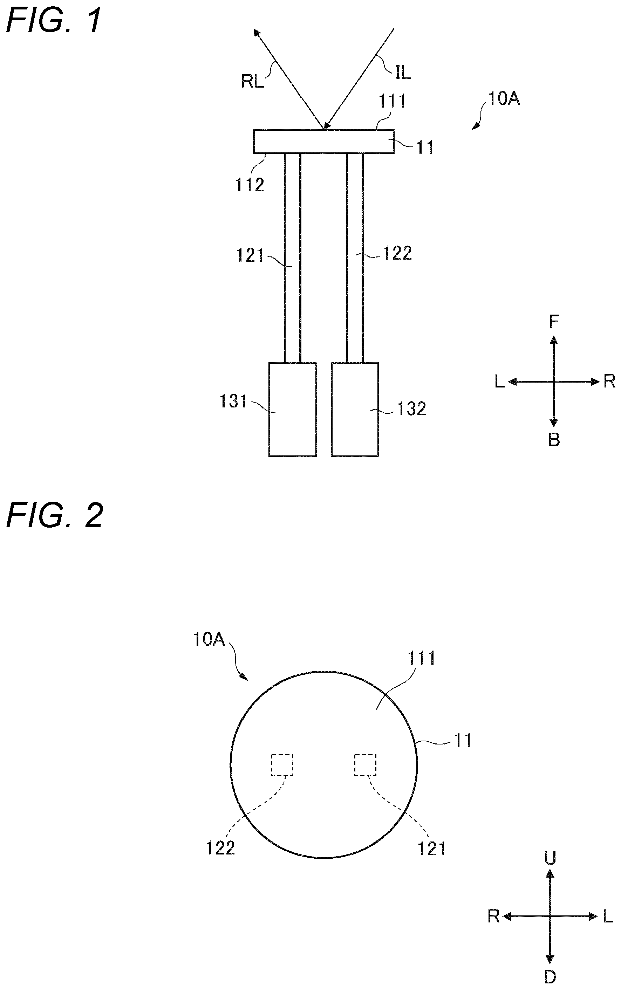

FIG. 1 schematically illustrates a configuration of a light reflecting device 10A according to a first embodiment, not forming part of the claimed invention, but useful to understand the claimed invention. FIG. 2 illustrates the light reflecting device 10A as viewed from a front side.

The light reflecting device 10A includes a light reflecting member 11. The light reflecting member 11 has a mirror face 111 capable of reflecting incident light IL. The mirror face 111 may be formed by subjecting a substrate of the light reflecting member 11 to mirror processing by polishing or the like, or may be formed by vapor deposition or adhesion of a metal layer such as aluminum or gold to the substrate. In this example, the mirror face 111 has a circular shape when viewed from the normal direction thereof. The diameter of the mirror face is, for example, 10 mm. The shape and dimension of the mirror face 111 can be appropriately determined according to the specifications required for the light reflecting device 10A.

The light reflecting device 10A includes a first arm member 121. The first arm member 121 extends so that a longitudinal direction thereof corresponds to a direction intersecting the mirror face 111 of the light reflecting member 11. One end portion of the first arm member 121 in the longitudinal direction is bonded to a back face 112 of the light reflecting member 11. The back face 112 is a face different from the mirror face 111. In other words, the back face 112 is a face that is not configured as a mirror face.

The light reflecting device 10A includes a second arm member 122. The second arm member 122 extends so that a longitudinal direction thereof corresponds to a direction intersecting the mirror face 111 of the light reflecting member 11. One end portion of the second arm member 122 in the longitudinal direction is bonded to the back face 112 of the light reflecting member 11.

As used herein, the term "bonding" means processing in which an interface between two members is made contiguous and indivisible without intervention of other members or materials. Examples of such processing include direct wafer bonding, anodic bonding, fusion bonding, and the like. That is, the processing is distinguished from mechanical coupling, adhesion, soldering, brazing, and the like.

The light reflecting device 10A includes a first actuator 131. The first actuator 131 supports the first arm member 121. The first actuator 131 displaces the first arm member 121 in a direction intersecting the mirror face 111 of the light reflecting member 11. For example, the first actuator 131 may be configured to include a piezoelectric element that expands and shrinks along that direction in response to an applied voltage.

The light reflecting device 10A includes a second actuator 132. The second actuator 132 supports the second arm member 122. The second actuator 132 displaces the second arm member 122 in a direction intersecting the mirror face 111 of the light reflecting member 11. For example, the second actuator 132 may be configured to include a piezoelectric element that expands and shrinks along that direction in response to an applied voltage.

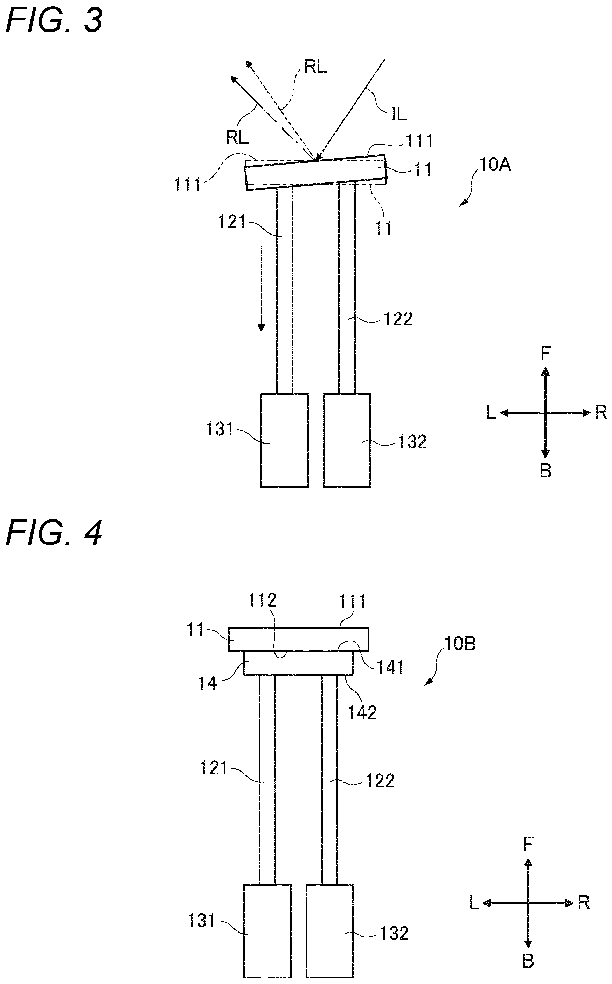

FIG. 3 illustrates a state where the first arm member 121 is pulled rearward by the first actuator 131 and the initial state of the second arm member 122 is maintained by the second actuator 132. A traveling direction of reflected light RL is changed in accordance with a change in an angle of the mirror face 111 of the light reflecting member 11 relative to the incident light IL from the initial state illustrated in FIG. 1. In other words, the traveling direction of the light RL reflected by the light reflecting member 11 can be adjusted by appropriately setting each of the displacement amount of the first arm member 121 caused by the first actuator 131 and the displacement amount of the second arm member 122 caused by the second actuator 132.

In the present embodiment, the material for forming the light reflecting member 11 and the material for forming each of the first arm member 121 and the second arm member 122 are selected so that the thermal expansion coefficient of the light reflecting member 11 is smaller than the thermal expansion coefficients of each of the first arm member 121 and the second arm member 122.

For example, materials that can form each of the light reflecting member 11, the first arm member 121, and the second arm member 122 include silicon, glass, sealing glass, metal, and the like. The thermal expansion coefficient of silicon is smaller than the thermal expansion coefficient of glass. The thermal expansion coefficient of the glass is smaller than the thermal expansion coefficient of the sealing glass. The thermal expansion coefficient of the sealing glass is smaller than the thermal expansion coefficient of the metal. Accordingly, as an example, in a case where each of the first arm member 121 and the second arm member 122 is formed of metal, the light reflecting member 11 may be formed of any of silicon, glass, and sealing glass. As another example, in a case where the light reflecting member 11 is formed of glass, each of the first arm member 121 and the second arm member 122 may be formed of sealing glass or metal.

A thermal change of the environment in which the light reflecting device 10A is disposed may cause deformation of each of the light reflecting member 11, the first arm member 121, and the second arm member 122. However, occurrence of strain in the mirror face 111 due to the thermal change in the environment can be easily suppressed by configuring the light reflecting device 10A such that the thermal expansion coefficient of a portion closer to the mirror face 111 is made smaller. Therefore, it is possible to suppress the occurrence of a situation where the traveling direction of the light RL reflected by the mirror face 111 deviates from a desired direction due to the thermal change in the environment.

FIG. 4 schematically illustrates a configuration of a light reflecting device 10B according to a second embodiment, the configuration not forming part of the claimed invention. Components that are substantially the same as those of the light reflecting device 10A according to the first embodiment are assigned with the same reference numerals, and repetitive descriptions for those will be omitted.

The light reflecting device 10B includes a supporting member 14. The supporting member 14 includes a supporting face 141 and a back face 142. The supporting face 141 is bonded to the back face 112 of the light reflecting member 11. One end portion of the first arm member 121 in the longitudinal direction and one end portion of the second arm member 122 in the longitudinal direction are bonded to the back face 142.

In the present embodiment, the material for forming the light reflecting member 11, the material for forming each of the first arm member 121 and the second arm member 122, and the material for forming the supporting member 14 are selected so that the thermal expansion coefficient of the light reflecting member 11 is smaller than at least one of the thermal expansion coefficients of each of the first arm member 121 and the second arm member 122 and the thermal expansion coefficient of the supporting member 14.

As an example, the thermal expansion coefficient of the light reflecting member 11 may be configured to be smaller than the thermal expansion coefficient of the supporting member 14, and the thermal expansion coefficient of the supporting member 14 may be configured to be smaller than the thermal expansion coefficients of each of the first arm member 121 and the second arm member 122. In other words, the thermal expansion coefficient may be made smaller gradually as it approaches the mirror face 111.

The light reflecting member 11 and the supporting member 14 may be formed of the same material. In this case, the thermal expansion coefficient of the material is selected to be smaller than the thermal expansion coefficient of the material forming each of the first arm member 121 and the second arm member 122.

The supporting member 14, the first arm member 121, and the second arm member 122 may be formed of the same material. In this case, the thermal expansion coefficient of the material is selected to be larger than the thermal expansion coefficient of the material forming the light reflecting member 11.

The material forming each of the light reflecting member 11, the supporting member 14, the first arm member 121, and the second arm member 122 may be selected from silicon, glass, sealing glass, and metal exemplified above so as to satisfy the above requirements.

A thermal change of the environment in which the light reflecting device 10B is disposed may cause deformation of each of the light reflecting member 11, the supporting member 14, the first arm member 121, and the second arm member 122. However, occurrence of strain in the mirror face 111 due to the thermal change in the environment can be easily suppressed by configuring the light reflecting device 10B such that the thermal expansion coefficient of a portion closer to the mirror face 111 is made smaller. Therefore, it is possible to suppress the occurrence of a situation where the traveling direction of the light RL reflected by the mirror face 111 deviates from a desired direction due to the thermal change in the environment.

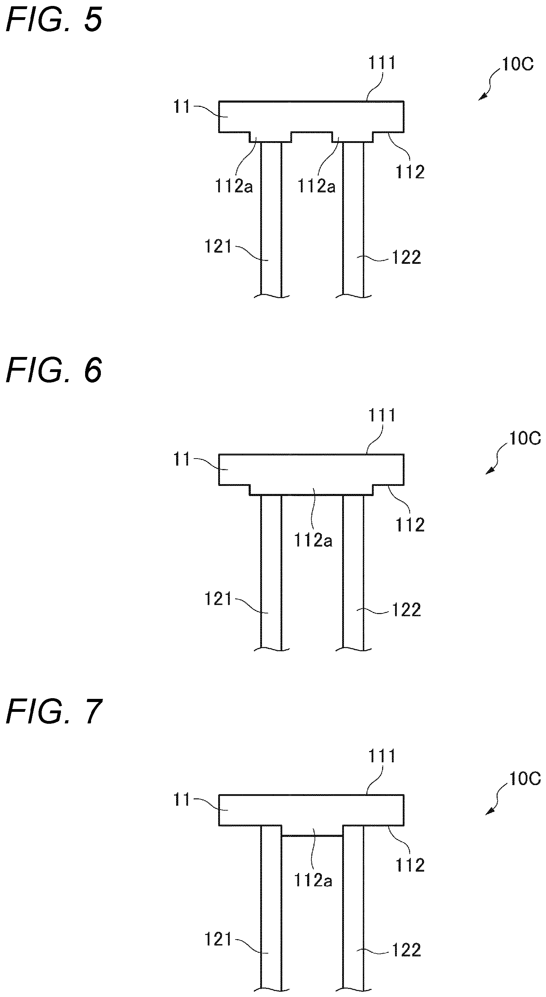

FIG. 5 partially illustrates a light reflecting device 10C according to a third embodiment, the configuration of figure 5 not forming part of the claimed invention. Components that are substantially the same as those of the light reflecting device 10A according to the first embodiment are assigned with the same reference numerals, and repetitive descriptions for those will be omitted.

In the present embodiment, the back face 112 of the light reflecting member 11 includes a thick portion 112a whose distance from the mirror face 111 is increased. For example, in a case where the diameter of the mirror face 111 is 10 mm, the distance from the mirror face 111 in the thick portion 112a is about 0.5 mm to 1 mm longer than the distance from the mirror face 111 in a portion that is not formed as the thick portion 112a. Each of the first arm member 121 and the second arm member 122 is bonded to the thick portion 112a.

A thermal change of the environment in which the light reflecting device 10C is disposed may cause deformation of each of the light reflecting member 11, the first arm member 121, and the second arm member 122. Strain stress that may occur as a result of the deformation is likely to be concentrated at a position where each of the first arm member 121 and the second arm member 122 is bonded to the light reflecting member 11. However, by forming the thick portion 112a so that the distance from the mirror face 111 is increased at such a position, the strain stress can be made difficult to reach the mirror face 111. In other words, since it is easy to suppress the occurrence of strain in the mirror face 111 caused by the thermal change of the environment, it is possible to suppress the occurrence of a situation where the traveling direction of the light RL reflected by the mirror face 111 deviates from a desired direction due to the thermal change of the environment.

The material forming each of the first arm member 121 and the second arm member 122 may be the same as or different from the material forming the light reflecting member 11. In a case where the two materials are different from each other, the material can be selected so that the thermal expansion coefficient of the light reflecting member 11 is smaller than the thermal expansion coefficients of the first arm member 121 and the second arm member 122. In other words, the strain in the mirror face 111 caused by the thermal change in the environment can be suppressed more easily by configuring the light reflecting device 10C such that the thermal expansion coefficient of a portion closer to the mirror face 111 is made smaller.

In the example illustrated in FIG. 5, a plurality of thick portions 112a are formed in the light reflecting member 11, and each of the first arm member 121 and the second arm member 122 is bonded to one of the plurality of thick portions 112a. However, as illustrated in FIG. 6, the first arm member 121 and the second arm member 122 may be bonded to a single thick portion 112a.

In the example illustrated in FIGS. 5 and 6, one end face of the first arm member 121 in the longitudinal direction and one end face of the second arm member 122 in the longitudinal direction are bonded to the thick portion 112a of the light reflecting member 11. However, as illustrated in FIG. 7, a side face intersecting one end face in the longitudinal direction of the first arm member 121 is bonded to a side portion of the thick portion 112a. Similarly, a side face intersecting one end face in the longitudinal direction of the second arm member 122 may be bonded to a side portion of the thick portion 112a.

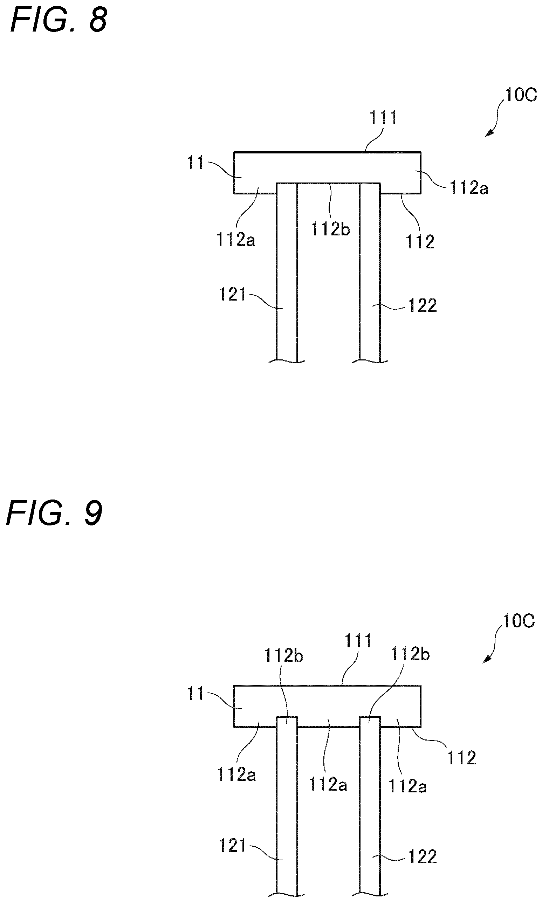

As illustrated in FIG. 8, the thick portion 112a of the light reflecting member 11 may be formed so as to define a recessed portion 112b. In this case, the first arm member 121 and the second arm member 122 may be bonded to the light reflecting member 11 in the recessed portion 112b. Specifically, a side face intersecting one end face in the longitudinal direction of the first arm member 121 is bonded to a side portion of the thick portion 112a defining a part of the recessed portion 112b. Similarly, a side face intersecting one end face in the longitudinal direction of the second arm member 122 is bonded to a side portion of the thick portion 112a defining another portion of the recessed portion 112b.

As illustrated in FIG. 9, the thick portion 112a of the light reflecting member 11 may be formed so as to define a plurality of recessed portions 112b. In this case, the first arm member 121 and the second arm member 122 may be bonded to the light reflecting member 11 in one of the recessed portions 112b. Specifically, a side face intersecting one end face in the longitudinal direction of the first arm member 121 is bonded to a side portion of the thick portion 112a defining one of the recessed portions 112b. Similarly, a side face intersecting one end face in the longitudinal direction of the second arm member 122 is bonded to a side portion of the thick portion 112a defining another one of the recessed portions 112b.

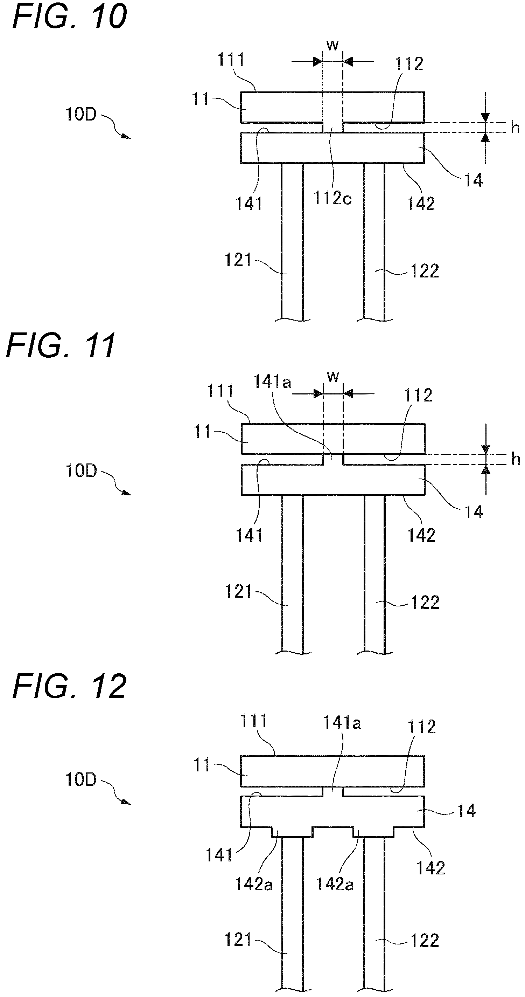

FIG. 10 schematically illustrates a configuration of a light reflecting device 10D according to a fourth embodiment. Components that are substantially the same as those of the light reflecting device 10B according to the second embodiment are assigned with the same reference numerals, and repetitive descriptions for those will be omitted.

In the present embodiment, the back face 112 of the light reflecting member 11 includes a protrusion 112c protruding in a direction intersecting the mirror face 111. In other words, at the protrusion 112c, the dimension of the light reflecting member 11 in the direction intersecting the mirror face 111 is increased. In a case where the diameter of the mirror face 111 is 10 mm, the height h of the protrusion 112c in the direction intersecting the mirror face 111 and the width w of the protrusion 112c in the direction parallel to the mirror face 111 may be, for example, 0.5 mm to 1 mm. The height h and the width w may be the same or different.

The supporting face 141 of the supporting member 14 faces the back face 112 of the light reflecting member 11. The supporting face 141 is bonded to the light reflecting member 11 at the protrusion 112c.

A thermal change of the environment in which the light reflecting device 10D is disposed may cause deformation of each of the light reflecting member 11, the supporting member 14, the first arm member 121, and the second arm member 122. Strain stress that may occur as a result of the deformation is likely to concentrate on a junction between the light reflecting member 11 and the supporting member 14 that is restricted in a narrow region. However, by forming the protrusion 112c so that the distance to the mirror face 111 is increased at such a position, the strain stress can be made difficult to reach the mirror face 111. In other words, since it is easy to suppress the occurrence of strain in the mirror face 111 caused by the thermal change of the environment, it is possible to suppress the occurrence of a situation where the traveling direction of the light RL reflected by the mirror face 111 deviates from a desired direction due to the thermal change of the environment.

Instead of the protrusion 112c of the light reflecting member 11, as illustrated in FIG. 11, the supporting face 141 of the supporting member 14 includes a protrusion 141a protruding in a direction intersecting the mirror face 111. In other words, at the protrusion 141a, the dimension of the supporting member 14 in the direction intersecting the mirror face 111 is increased. In a case where the diameter of the mirror face 111 is 10 mm, the height h of the protrusion 141a in the direction intersecting the mirror face 111 and the width w of the protrusion 141a in the direction parallel to the mirror face 111 may be, for example, 0.5 mm to 1 mm. The height h and the width w may be the same or different. Even with such a configuration, the above-described advantages can be obtained.

The light reflecting member 11 on which at least one protrusion 112c is formed and the supporting member 14 on which at least one protrusion 141a is formed are bonded to each other.

In addition to or instead of the configuration illustrated in FIG. 10 or FIG. 11, as illustrated in FIG. 12, a back face 142 of the supporting member 14 may include a thick portion 142a at which a distance from the mirror face 111 is increased. For example, in a case where the diameter of the mirror face 111 is 10 mm, the distance from the mirror face 111 in the thick portion 142a is about 0.5 mm to 1 mm longer than the distance from the mirror face 111 in a portion that is not formed as the thick portion 142a. Each of the first arm member 121 and the second arm member 122 is bonded to the thick portion 142a.

A thermal change of the environment in which the light reflecting device 10D is disposed may cause deformation of each of the light reflecting member 11, the first arm member 121, and the second arm member 122. Strain stress that may occur as a result of the deformation is likely to be concentrated at a position where each of the first arm member 121 and the second arm member 122 is bonded to the supporting member 14. However, by forming the thick portion 142a so that the distance from the mirror face 111 is increased at such a position, the strain stress can be made difficult to reach the mirror face 111. In other words, since it is easy to suppress the occurrence of strain in the mirror face 111 caused by the thermal change of the environment, it is possible to suppress the occurrence of a situation where the traveling direction of the light RL reflected by the mirror face 111 deviates from a desired direction due to the thermal change of the environment.

In the present embodiment, the material for forming the light reflecting member 11, the material for forming each of the first arm member 121 and the second arm member 122, and the material for forming the supporting member 14 are selected so that the thermal expansion coefficient of the light reflecting member 11 is smaller than at least one of the thermal expansion coefficients of each of the first arm member 121 and the second arm member 122 and the thermal expansion coefficient of the supporting member 14. As a result, the strain in the mirror face 111 caused by the thermal change of the environment can be suppressed more easily.

As an example, the thermal expansion coefficient of the light reflecting member 11 may be configured to be smaller than the thermal expansion coefficient of the supporting member 14, and the thermal expansion coefficient of the supporting member 14 may be configured to be smaller than the thermal expansion coefficients of each of the first arm member 121 and the second arm member 122. In other words, the thermal expansion coefficient may be made smaller gradually as it approaches the mirror face 111.

The light reflecting member 11 and the supporting member 14 may be formed of the same material. In this case, the thermal expansion coefficient of the material is selected to be smaller than the thermal expansion coefficient of the material forming each of the first arm member 121 and the second arm member 122.

The supporting member 14, the first arm member 121, and the second arm member 122 may be formed of the same material. In this case, the thermal expansion coefficient of the material is selected to be larger than the thermal expansion coefficient of the material forming the light reflecting member 11.

In each of the above-described embodiments, the first actuator 131 includes a piezoelectric element that displaces the first arm member 121. Similarly, the second actuator 132 includes a piezoelectric element that displaces the second arm member 122. The piezoelectric element is suitable for precisely control of the amount of displacement with high responsivity.

However, each of the first arm member 121 and the second arm member 122 may be configured to include a piezoelectric element. In this case, each of the first arm member 121 and the second arm member 122 is displaced (expanded or shrunk) in a direction intersecting the mirror face 111 of the light reflecting member 11 in accordance with the applied voltage. In other words, each of the first arm member 121 and the second arm member 122 may be a part of the actuator.

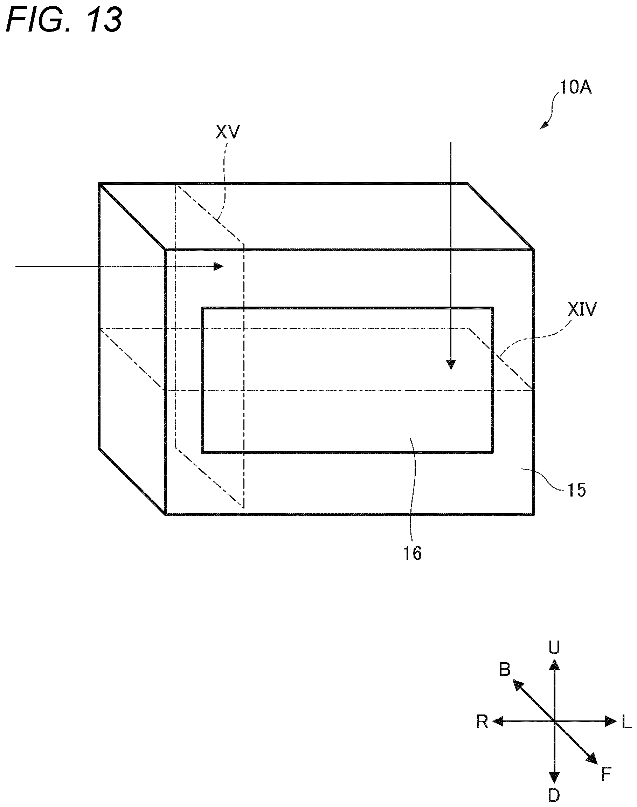

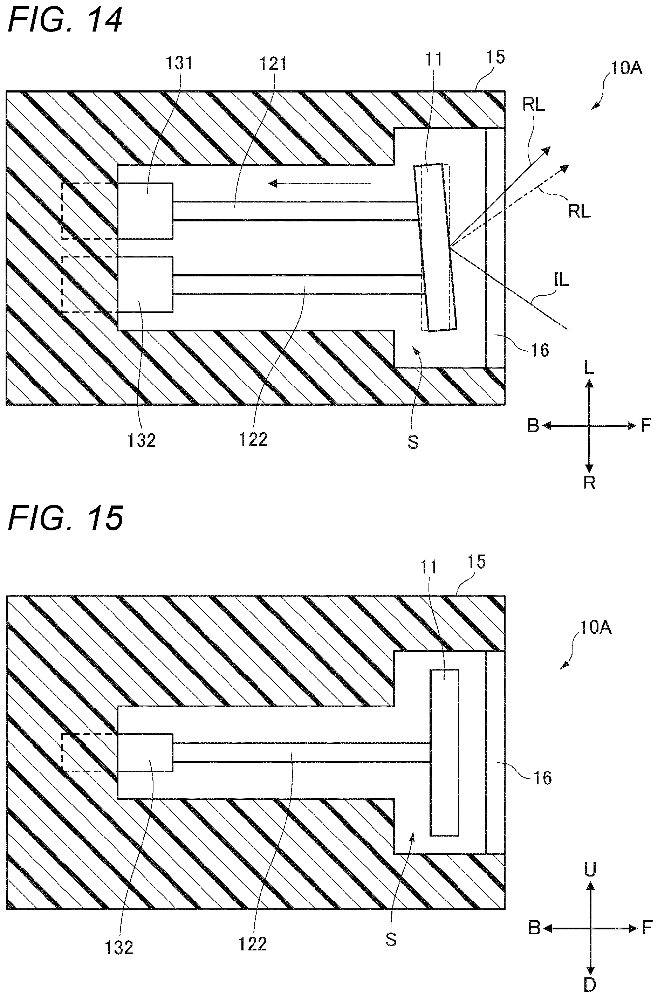

As illustrated in FIG. 13, the light reflecting device 10A according to the first embodiment may include a housing 15 and a window 16. FIG. 14 illustrates a configuration in which a cross section XIV in FIG. 13 is viewed from an arrowed direction. FIG. 15 illustrates a configuration in which a cross-section XV in FIG. 13 is viewed from an arrowed direction.

The housing 15 and the window 16 define a space S that is hermetically sealed while allowing the light reflecting member 11, the first arm member 121, and the second arm member 122 to be displaced. Specifically, the housing 15 is formed by resin molding. In this example, a portion that is to be subjected to the displacement in each of the first actuator 131 and the second actuator 132 is exposed in the space S. On the other hand, a portion that is to be subjected to the displacement in each of the first actuator 131 and the second actuator 132 is covered with a resin-molded portion.

The light IL coming from the light source passes through the window 16 and is incident on the mirror face 111 of the light reflecting member 11 disposed in the space S. The light RL reflected by the mirror face 111 passes through the window 16 and exits the housing 15.

Since the mirror face 111 is disposed in the hermetically sealed space S, it is possible to suppress the influence of the thermal change of the external environment on the mirror face 111. As a result, the strain in the mirror face 111 caused by the thermal change of the environment can be suppressed more easily.

An inert gas may be filled in the space S. In this case, it is possible to further suppress the influence of the thermal change of the external environment on the mirror face 111. Instead of the inert gas, dry air may be filled in the space S.

Each of the light reflecting device 10B according to the second embodiment, the light reflecting device 10C according to the third embodiment, and the light reflecting device 10D according to the fourth embodiment may also have the configuration described with reference to FIGS. 13 to 15.

In the following descriptions, the light reflecting device 10A according to the first embodiment, the light reflecting device 10B according to the second embodiment, the light reflecting device 10C according to the third embodiment, and the light reflecting device 10D according to the fourth embodiment will be collectively referred to as a "light reflecting device 10" as required.

In each of the first to fourth embodiments, in a case where the light IL incident on the light reflecting member 11 is laser light, a thermal change is likely to occur in the environment in which the light reflecting device 10 is disposed. Accordingly, the various advantages described above are more remarkable.

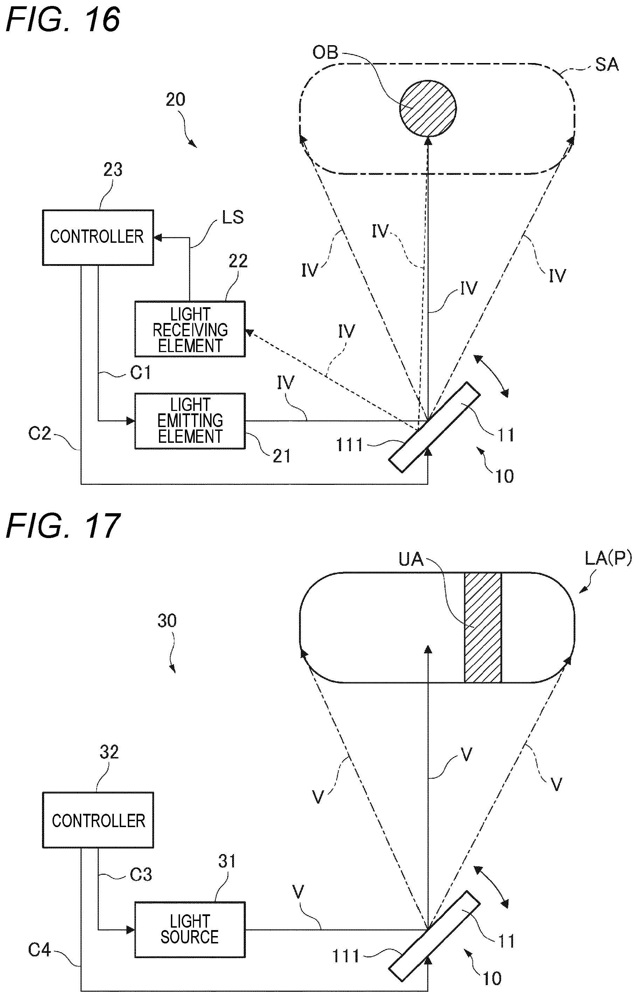

The light reflecting device 10 according to each of the first to fourth embodiments can be equipped in a sensor device 20 illustrated in FIG. 16. The sensor device 20 is a device configured to detect an object OB located in a prescribed sensing area SA.

The sensor device 20 includes a light emitting element 21. The light emitting element 21 is configured to emit non-visible light IV. The light emitting element 21 can be implemented by a light emitting diode, a laser diode, or the like.

The sensor device 20 includes a light receiving element 22. The light receiving element 22 is sensitive to the wavelength of the non-visible light IV emitted by the light emitting element 21, and is configured to output a light detecting signal LS corresponding to the intensity of the incident light. The light receiving element 22 can be implemented by a photodiode, a phototransistor, a photo resistor, or the like.

The sensor device 20 includes a controller 23. The controller 23 is configured to output an emission control signal C1 for causing the light emitting element 21 to emit the non-visible light IV, and a reflection control signal C2 for causing the light reflecting device 10 to adjust the posture of the light reflecting member 11. The controller 23 is configured to receive the light detecting signal LS outputted from the light receiving element 22.

The controller 23 outputs the emission control signal C1 to cause the light emitting element 21 to emit pulsed non-visible light IV. The non-visible light IV emitted from the light emitting element 21 is incident on the light reflecting member 11. An appropriate optical system may be disposed between the light emitting element 21 and the light reflecting member 11. The non-visible light IV reflected by the mirror face 111 of the light reflecting member 11 travels toward the sensing area SA.

In a case where the object OB is located on the path of the non-visible light IV, it is reflected by the object OB and returns toward the light reflecting member 11. The controller 23 outputs the reflection control signal C2 to cause at least one of the first actuator 131 and the second actuator 132 of the light reflecting device 10 to displace at least one of the first arm member 121 and the second arm member 122. As a result, a reflection angle of the mirror face 111 of the light reflecting member 11 is changed. Specifically, the posture of the light reflecting member 11 is adjusted so that the returned light from the object OB is reflected toward the light receiving element 22. An appropriate optical system may be disposed between the light reflecting member 11 and the light receiving element 22.

The returned light from the object OB reflected by the mirror face 111 is incident on the light receiving element 22. In the light receiving element 22, a pulse-shaped change in the light receiving intensity is detected. The light receiving element 22 outputs a light detecting signal LS corresponding to the change. The controller 23 can detect a fact that an object OB is located on the path of the non-visible light IV emitted from the light emitting element 21 and reflected by the light reflecting member 11 by receiving the light detecting signal LS corresponding to the pulsed change of the light receiving intensity. In addition, the controller 23 can detect a distance to the object OB based on a time length from the time when the non-visible light IV is emitted by the light emitting element 21 to the time when the returned light is detected by the light receiving element 22.

The controller 23 repeats the above-described processing while changing the posture of the light reflecting member 11 at the time of causing the light emitting element 21 to emit the non-visible light IV with the reflection control signal C2. As a result, the traveling direction of the non-visible light IV is changed within a range indicated by the chain lines in FIG. 16. The range corresponds to the sensing area SA. Accordingly, it is possible to realize a configuration for detecting an object OB by scanning the sensing area SA with the non-visible light IV emitted from the single light emitting element 21.

As described above, since the strain in the mirror face 111 of the light reflecting member 11 caused by the thermal change of the environment is suppressed, it is also possible to suppress degradation in the detection accuracy of the object OB by the sensor device 20 using the mirror face 111.

The controller 23 having the above-described functions can be implemented by an output interface for outputting the emission control signal C1 and the reflection control signal C2, an input interface for receiving the light detecting signal LS, and a processor for executing processing relating to the emission control signal C1, the reflection control signal C2, and the light detecting signal LS. The processor may be implemented by an exclusive integrated circuit such as a microcontroller, an ASIC, an FPGA, or the like. The processor may be implemented by a general-purpose processor operating in conjunction with a general-purpose memory.

The light reflecting device 10 according to each of the above embodiments can be equipped in a lighting device 30 illustrated in FIG. 17. The lighting device 30 is a device configured to light a prescribed lighting area LA with visible light V.

The lighting device 30 includes a light source 31. The light source 31 is configured to emit visible light V. The light source 31 can be implemented by a semiconductor light emitting element such as a light emitting diode, a laser diode, or an EL element.

The lighting device 30 includes a controller 32. The controller 32 is configured to output an emission control signal C3 for causing the light source 31 to emit visible light V, and a reflection control signal C4 for causing the light reflecting device 10 to adjust the posture of the light reflecting member 11.

The controller 32 causes the light source 31 to emit the visible light V by outputting the emission control signal C3. The visible light V emitted from the light source 31 is incident on the light reflecting member 11. An appropriate optical system may be disposed between the light source 31 and the light reflecting member 11. The visible light V reflected by the mirror face 111 of the light reflecting member 11 travels toward the lighting area LA. The visible light V forms a part of a prescribed light distribution pattern P in the lighting area LA.

The controller 32 repeats the above-described processing while changing the posture of the light reflecting member 11 at the time of causing the light source 31 to emit the visible light V with the reflection control signal C4. As a result, the traveling direction of the visible light V is changed within a range indicated by the chain lines in FIG. 17. The range corresponds to the lighting area LA. By repeating the scanning of the lighting area LA with the visible light V emitted from the single light source 31 at a frequency unrecognizable by the human eye, it appears that a light distribution pattern P having an area wider than the area that can be lighted with the visible light V emitted from the single light source 31 is continuously formed.

The controller 32 may change the combination of the emission control signal C3 and the reflection control signal C4 so as to stop the light emission of the visible light V from the light source 31 when the light reflecting member 11 is in a posture capable of reflecting the visible light V in a specific direction in the lighting area LA. In this case, as illustrated in FIG. 17, it is possible to form a light distribution pattern P including a partial non-lighting area UA in the lighting area LA.

As described above, since the strain in the mirror face 111 of the light reflecting member 11 caused by the thermal change of the environment is suppressed, it is also possible to suppress degradation in the accuracy as to the position and shape of the light distribution pattern P formed by the lighting device 30 using the mirror face 111.

The controller 32 having the above-described functions can be implemented by an output interface for outputting the emission control signal C3 and the reflection control signal C4, and a processor for executing processing relating to the emission control signal C3 and the reflection control signal C4. The processor may be implemented by an exclusive integrated circuit such as a microcontroller, an ASIC, an FPGA, or the like. The processor may be implemented by a general-purpose processor operating in conjunction with a general-purpose memory.

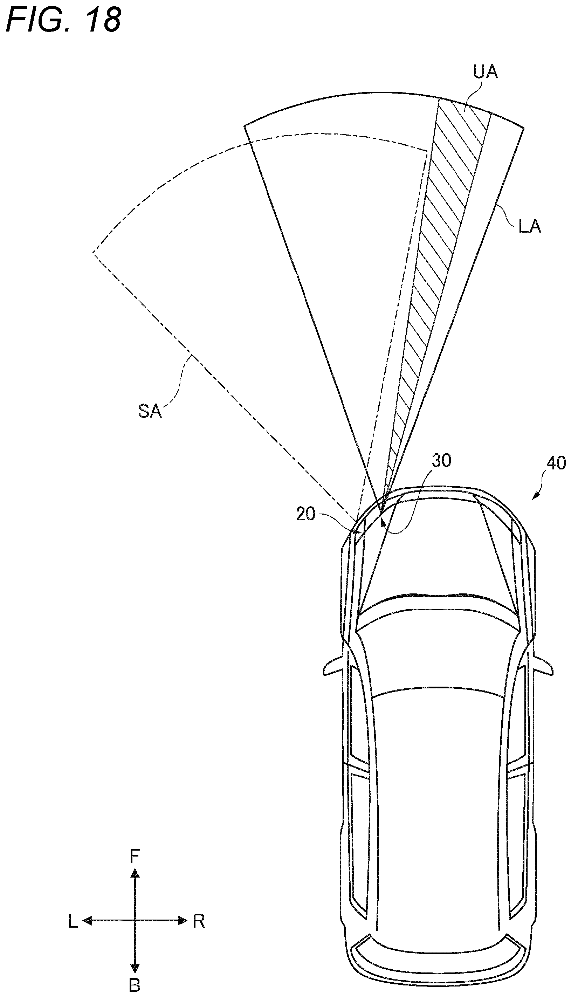

As illustrated in FIG. 18, at least one of the sensor device 20 and the lighting device 30 may be mounted on a vehicle 40. The vehicle 40 is an example of a mobile entity. In this example, at least one of the sensor device 20 and the lighting device 30 is mounted on a left front portion of the vehicle 40. The left front portion of the vehicle 40 is a portion located on the left of the center in the left-right direction of the vehicle 40 and ahead of the center in the front-rear direction of the vehicle 40. The sensing area SA of the sensor device 20 and the lighting area LA of the lighting device 30 are set outside the vehicle 40. The above-described non-lighting area UA is formed to suppress glare that may be imparted to an occupant of another vehicle or a pedestrian located in the lighting area LA.

In a case where both the sensor device 20 and the lighting device 30 are mounted on the vehicle 40, the light reflecting member 11 of the single light reflecting device 10 may be shared by the light emitting element 21 and the light receiving element 22 of the sensor device 20, as well as the light source 31 of the lighting device 30.

In a mobile entity such as the vehicle 40, a thermal change is likely to occur in the environment in which the light reflecting device 10 is disposed. Accordingly, the various advantages described above are more remarkable.

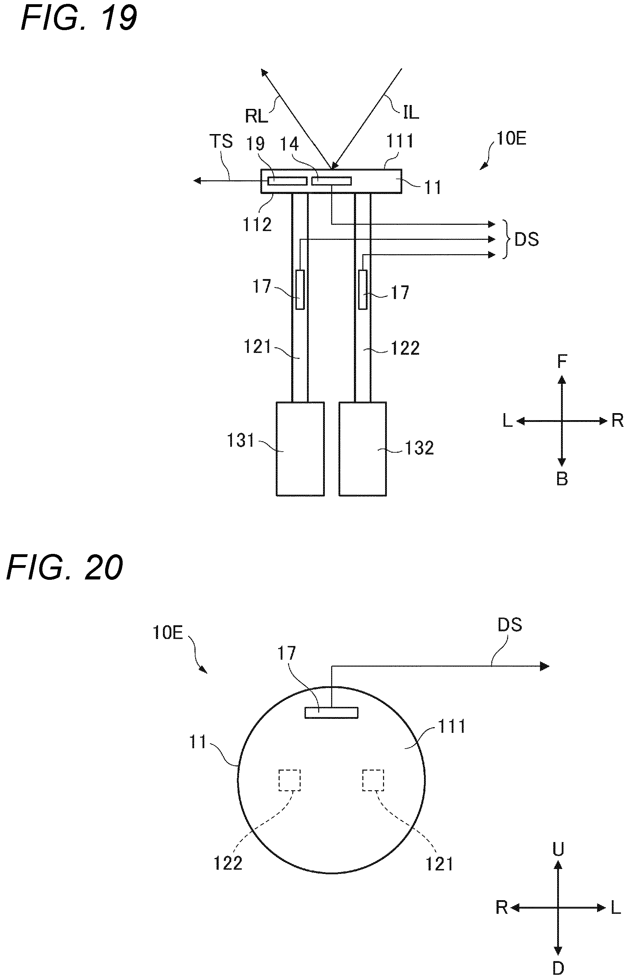

FIG. 19 schematically illustrates a configuration of a light reflecting device 10E according to a fifth embodiment, the configuration not forming part of the claimed invention. FIG. 20 illustrates a light reflecting device 10E as viewed from a front side. Components that are substantially the same as those of the light reflecting device 10A according to the first embodiment are assigned with the same reference numerals, and repetitive descriptions for those will be omitted.

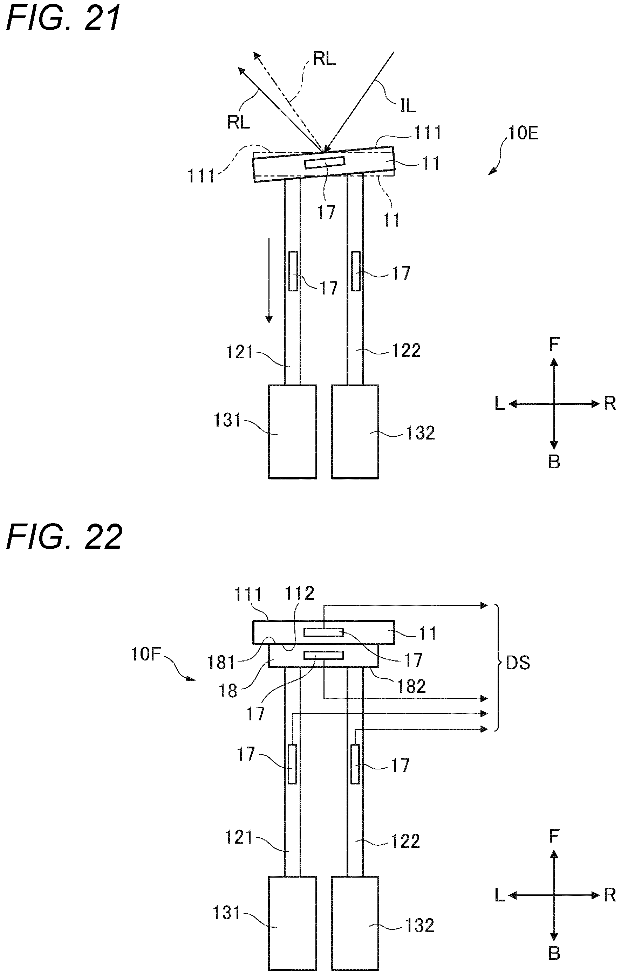

FIG. 21 illustrates a state where the first arm member 121 is pulled rearward by the first actuator 131 and the initial state of the second arm member 122 is maintained by the second actuator 132. A traveling direction of reflected light RL is changed in accordance with a change in an angle of the mirror face 111 of the light reflecting member 11 relative to the incident light IL from the initial state illustrated in FIG. 19. In other words, the traveling direction of the light RL reflected by the light reflecting member 11 can be adjusted by appropriately setting each of the displacement amount of the first arm member 121 caused by the first actuator 131 and the displacement amount of the second arm member 122 caused by the second actuator 132.

The light reflecting device 10E includes a plurality of strain gauges 17. In this example, the strain gauge 17 is disposed on each of the light reflecting member 11, the first arm member 121, and the second arm member 122. The strain gauge 17 is a device configured to detect strain generated at a place where the strain gauge 17 is disposed. The strain gauge 17 is configured to output a strain detecting signal DS corresponding to the detected strain. The strain gauge 17 is an example of a strain sensor.

A thermal change of the environment in which the light reflecting device 10E is disposed may cause deformation of each of the light reflecting member 11, the first arm member 121, and the second arm member 122. Such deformation may cause strain in the mirror face 111 of the light reflecting member 11, so that the traveling direction of the light RL reflected by the mirror face 111 may deviate from a desired direction. However, by detecting the deformation generated in each of the light reflecting member 11, the first arm member 121, and the second arm member 122 through the strain detecting signal DS outputted from the strain gauge 17, it is possible to control the light reflecting member 11 to change a reflection angle so as to cancel the deviation in the traveling direction of the reflected light RL caused by the strain generated in the mirror face 111. Therefore, it is possible to suppress the occurrence of a situation where the traveling direction of the light RL reflected by the mirror face 111 deviates from a desired direction due to the thermal change in the environment.

The number of strain gauges 17 disposed in at least one of the light reflecting member 11, the first arm member 121, and the second arm member 122 may be two or more. The strain gauge 17 may be disposed in at least one of the light reflecting member 11, the first arm member 121, and the second arm member 122. In a case where the strain gauge 17 is disposed on the light reflecting member 11, as illustrated in FIG. 20, the strain gauge 17 may be disposed at a position on the mirror face 111 at which the light reflection is not obstructed, so that the strain generated in the mirror face 111 may be detected more directly.

As illustrated in FIG. 19, the light reflecting device 10E may include a temperature sensor 19. The temperature sensor 19 is configured to detect temperature of the light reflecting member 11, and to output a temperature detecting signal TS corresponding to the detected temperature. Additionally or alternatively, the light reflecting device 10E may include a temperature sensor 19 that outputs a temperature detecting signal TS corresponding to temperature of at least one of the first arm member 121 and the second arm member 122.

According to such a configuration, it is possible to add information as to the temperature of at least one of the light reflecting member 11, the first arm member 121 and the second arm member 122 acquired through the temperature detecting signal TS to the information as to the strain of at least one of the light reflecting member 11, the first arm member 121 and the second arm member 122 acquired through the strain detecting signal DS. As a result, it is possible to perform, based on more information, control for causing the light reflecting member 11 to change the reflection angle so as to cancel the deviation in the traveling direction of the reflected light RL caused by the strain generated in the mirror face 111.

FIG. 22 schematically illustrates a configuration of a light reflecting device 10F according to a sixth embodiment, the configuration not forming part of the claimed invention. Components that are substantially the same as those of the light reflecting device 10E according to the fifth embodiment are assigned with the same reference numerals, and repetitive descriptions for those will be omitted.

The light reflecting device 10F includes a supporting member 18. The supporting member 18 includes a supporting face 181 and a back face 182. The supporting face 181 is bonded to the back face 112 of the light reflecting member 11. One end portion of the first arm member 121 in the longitudinal direction and one end portion of the second arm member 122 in the longitudinal direction are bonded to the back face 182. In this example, the strain gauge 17 is also disposed on the supporting member 18.

A thermal change of the environment in which the light reflecting device 10E is disposed may cause deformation of each of the light reflecting member 11, the supporting member 18, the first arm member 121, and the second arm member 122. Such deformation may cause strain in the mirror face 111 of the light reflecting member 11, so that the traveling direction of the light RL reflected by the mirror face 111 may deviate from a desired direction. However, by detecting the deformation generated in each of the light reflecting member 11, the supporting member 18, the first arm member 121, and the second arm member 122 through the strain detecting signal DS outputted from the strain gauge 17, it is possible to control the light reflecting member 11 to change a reflection angle so as to cancel the deviation in the traveling direction of the reflected light RL caused by the strain generated in the mirror face 111. Therefore, it is possible to suppress the occurrence of a situation where the traveling direction of the light RL reflected by the mirror face 111 deviates from a desired direction due to the thermal change in the environment.

The number of strain gauges 17 disposed in at least one of the light reflecting member 11, the supporting member 18, the first arm member 121, and the second arm member 122 may be two or more. The strain gauge 17 may be disposed in at least one of the light reflecting member 11, the supporting member 18, the first arm member 121, and the second arm member 122.

The temperature sensor 19 described with reference to FIG. 19 may be disposed in at least one of the light reflecting member 11, the supporting member 18, the first arm member 121, and the second arm member 122. In other words, additionally based on the temperature detecting signal TS corresponding to the temperature of at least one of the light reflecting member 11, the supporting member 18, the first arm member 121, and the second arm member 122, it is possible to perform control for causing the light reflecting member 11 to change the reflection angle so as to cancel the deviation in the traveling direction of the reflected light RL caused by the strain generated in the mirror face 111.

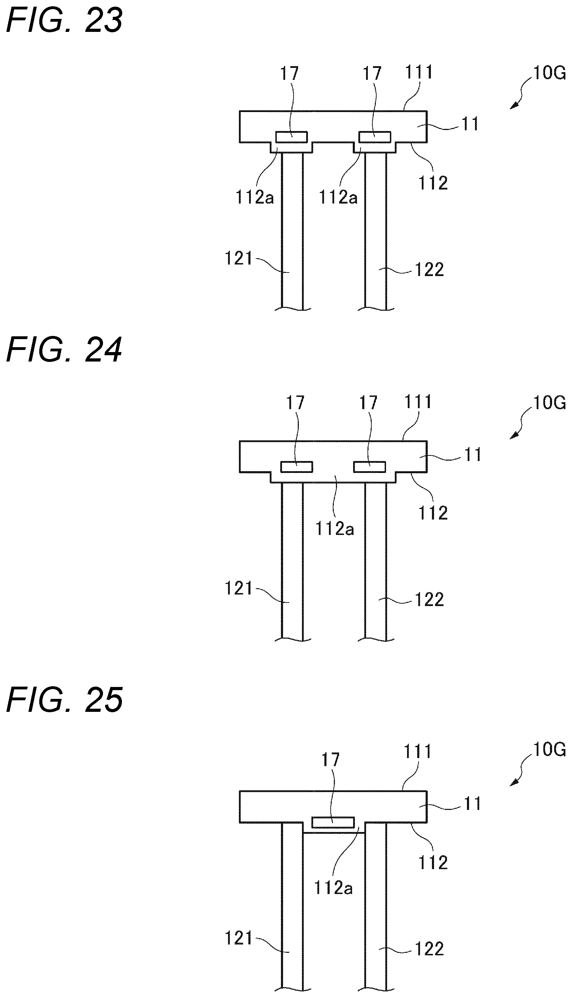

FIG. 23 partially illustrates a light reflecting device 10G according to a seventh embodiment, the configuration of figure 23 not forming part of the claimed invention. Components that are substantially the same as those of the light reflecting device 10E according to the fifth embodiment are assigned with the same reference numerals, and repetitive descriptions for those will be omitted.

In the present embodiment, the back face 112 of the light reflecting member 11 includes a thick portion 112a whose dimension in a direction intersecting the mirror face 111 is increased. Each of the first arm member 121 and the second arm member 122 is bonded to the thick portion 112a. The strain gauge 17 is disposed in the thick portion 112a.

A thermal change of the environment in which the light reflecting device 10G is disposed may cause deformation of each of the light reflecting member 11, the first arm member 121, and the second arm member 122. Strain stress that may occur as a result of deformation is likely to concentrate at a location where a surface shape changes, such as the thick portion 112a. By arranging the strain gauge 17 at such a position, it is possible to efficiently detect the strain.

In the example illustrated in FIG. 23, a plurality of thick portions 112a are formed in the light reflecting member 11, and each of the first arm member 121 and the second arm member 122 is bonded to one of the plurality of thick portions 112a. However, as illustrated in FIG. 24, the first arm member 121 and the second arm member 122 may be bonded to a single thick portion 112a.

In the example illustrated in FIGS. 23 and 24, one end face of the first arm member 121 in the longitudinal direction and one end face of the second arm member 122 in the longitudinal direction are bonded to the thick portion 112a of the light reflecting member 11. However, as illustrated in FIG. 25, a side face intersecting one end face in the longitudinal direction of the first arm member 121 may be bonded to a side portion of the thick portion 112a. Similarly, a side face intersecting one end face in the longitudinal direction of the second arm member 122 may be bonded to a side portion of the thick portion 112a.

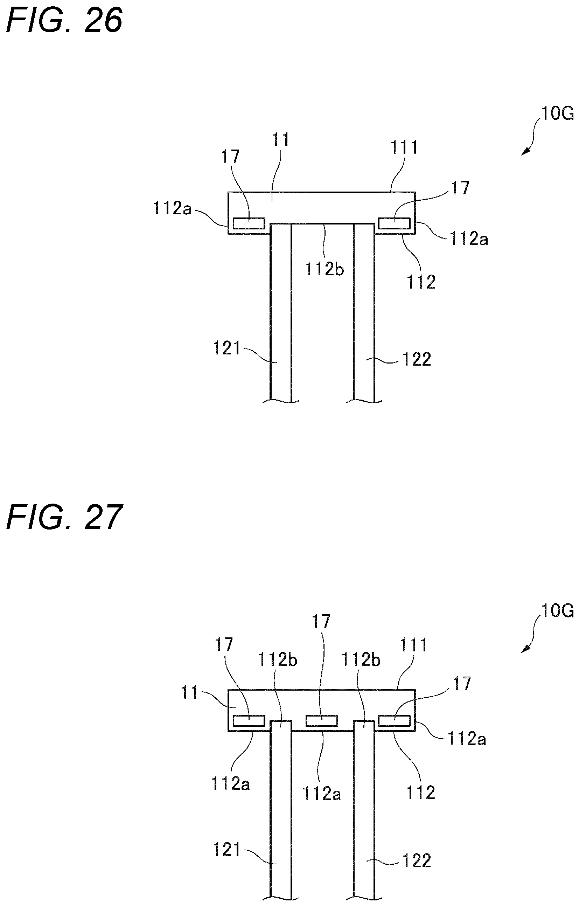

As illustrated in FIG. 26, the thick portion 112a of the light reflecting member 11 may be formed so as to define a recessed portion 112b. In this case, the first arm member 121 and the second arm member 122 may be bonded to the light reflecting member 11 in the recessed portion 112b. Specifically, a side face intersecting one end face in the longitudinal direction of the first arm member 121 is bonded to a side portion of the thick portion 112a defining a part of the recessed portion 112b. Similarly, a side face intersecting one end face in the longitudinal direction of the second arm member 122 is bonded to a side portion of the thick portion 112a defining another portion of the recessed portion 112b.

As illustrated in FIG. 27, the thick portion 112a of the light reflecting member 11 may be formed so as to define a plurality of recessed portions 112b. In this case, the first arm member 121 and the second arm member 122 may be bonded to the light reflecting member 11 in one of the recessed portions 112b. Specifically, a side face intersecting one end face in the longitudinal direction of the first arm member 121 is bonded to a side portion of the thick portion 112a defining one of the recessed portions 112b. Similarly, a side face intersecting one end face in the longitudinal direction of the second arm member 122 is bonded to a side portion of the thick portion 112a defining another one of the recessed portions 112b.

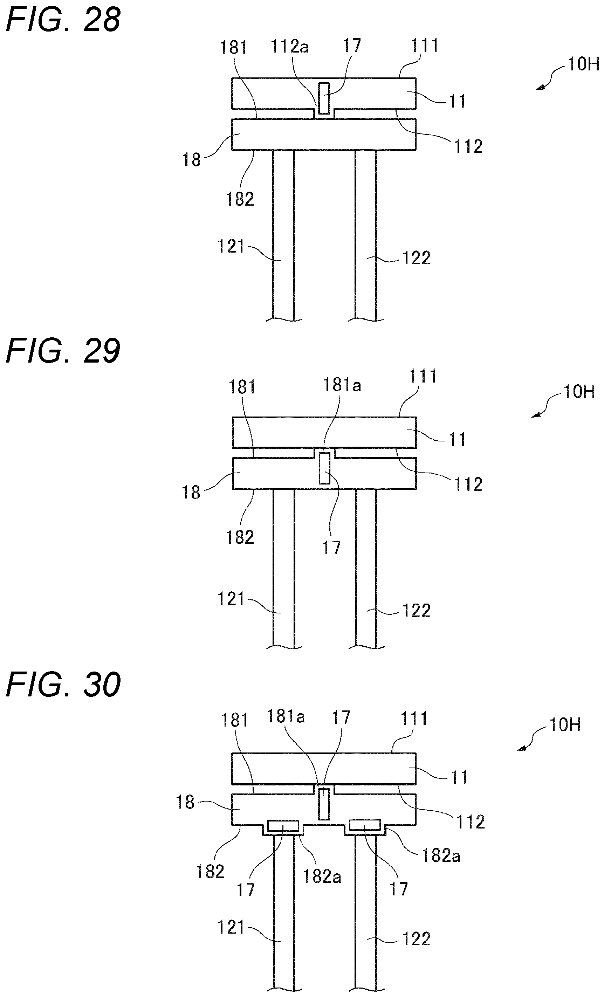

FIG. 28 schematically illustrates a configuration of a light reflecting device 10H according to an eighth embodiment. Components that are substantially the same as those of the light reflecting device 10F according to the sixth embodiment are assigned with the same reference numerals, and repetitive descriptions for those will be omitted.

In the present embodiment, the back face 112 of the light reflecting member 11 includes a thick portion 112a whose dimension in a direction intersecting the mirror face 111 is increased. The supporting face 181 of the supporting member 18 faces the back face 112 of the light reflecting member 11. The supporting face 181 is bonded to the light reflecting member 11 at the thick portion 112a. The strain gauge 17 is disposed in the thick portion 112a.

A thermal change of the environment in which the light reflecting device 10H is disposed may cause deformation of each of the light reflecting member 11, the supporting member 18, the first arm member 121, and the second arm member 122. Strain stress that may occur as a result of the deformation is likely to concentrate on a junction between the light reflecting member 11 and the supporting member 18 that is restricted in a narrow region. By arranging the strain gauge 17 at such a position, it is possible to efficiently detect the strain.

Instead of the thick portion 112a of the light reflecting member 11, as illustrated in FIG. 29, the supporting face 181 of the supporting member 18 may include a thick portion 181a having a larger dimension in a direction intersecting the mirror face 111. In this case, the strain gauge 17 is disposed in the thick portion 181a. Even with such a configuration, the above-described advantages can be obtained.

The light reflecting member 11 on which at least one thick portion 112a is formed and the supporting member 18 on which at least one thick portion 181a is formed may be bonded to each other.

In addition to or instead of the configuration illustrated in FIG. 28 or FIG. 29, as illustrated in FIG. 30, the back face 182 of the supporting member 18 may include a thick portion 182a having a larger dimension in a direction intersecting the mirror face 111. In this case, the strain gauge 17 is disposed in the thick portion 182a.

In each of the above-described embodiments, the first actuator 131 includes a piezoelectric element that displaces the first arm member 121. Similarly, the second actuator 132 includes a piezoelectric element that displaces the second arm member 122. The piezoelectric element is suitable for precisely control of the amount of displacement with high responsivity.

However, each of the first arm member 121 and the second arm member 122 may be configured to include a piezoelectric element. In this case, each of the first arm member 121 and the second arm member 122 is displaced (expanded or shrunk) in a direction intersecting the mirror face 111 of the light reflecting member 11 in accordance with the applied voltage. In other words, each of the first arm member 121 and the second arm member 122 may be a part of the actuator.

In the following descriptions, the light reflecting device 10E according to the fifth embodiment, the light reflecting device 10F according to the sixth embodiment, the light reflecting device 10G according to the seventh embodiment, and the light reflecting device 10H according to the eighth embodiment will be collectively referred to as a "light reflecting device 10" as required.

In each of the fifth to eighth embodiments, in a case where the light IL incident on the light reflecting member 11 is laser light, a thermal change is likely to occur in the environment in which the light reflecting device 10 is disposed. Accordingly, the various advantages described above are more remarkable.

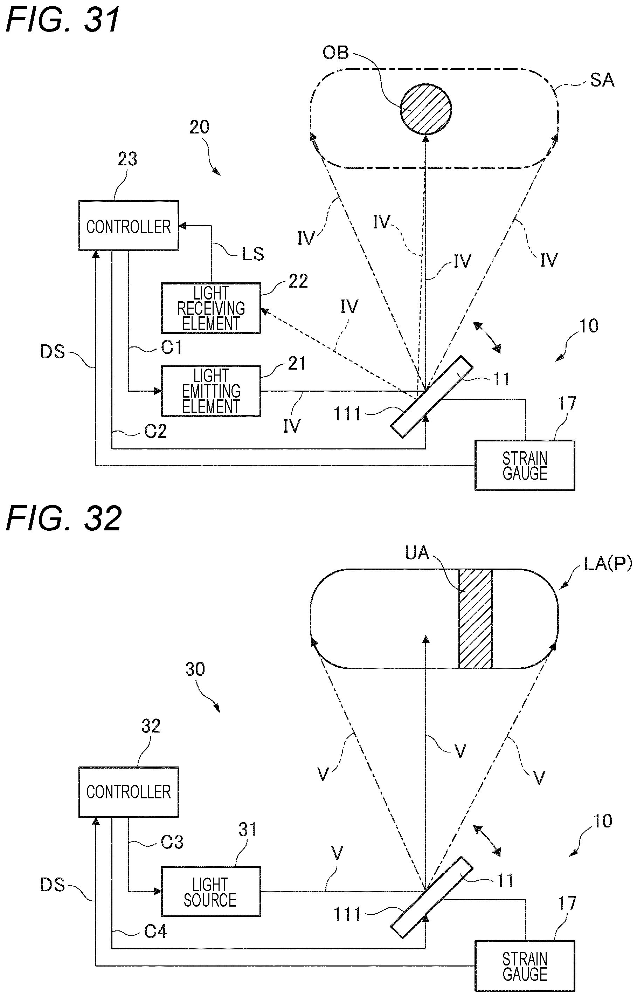

The light reflecting device 10 according to each of the fifth to eighth embodiments can be equipped in a sensor device 20 illustrated in FIG. 31. The sensor device 20 is a device configured to detect an object OB located in a prescribed sensing area SA. Components that are substantially the same as those of the sensor device 20 illustrated in FIG. 16 are assigned with the same reference numerals, and repetitive descriptions for those will be omitted.

The controller 23 is configured to receive a strain detecting signal DS from the strain gauge 17. The controller 23 is configured to detect strain generated in the light reflecting device 10 due to a thermal change of the environment based on the strain detecting signal DS, and to output a reflection control signal C2 for changing the attitude of the light reflecting member 11 so as to cancel the deviation in the traveling direction of the reflected light RL caused by the strain generated in the mirror face 111.

As a result, since it is possible to suppress the occurrence of a situation where the traveling direction of the light RL reflected by the mirror face 111 deviates from a desired direction due to a thermal change of the environment, it is also possible to suppress degradation in the detection accuracy of the object OB by the sensor device 20 using the mirror face 111.

The controller 23 having the above-described functions can be implemented by an output interface for outputting the emission control signal C1 and the reflection control signal C2, an input interface for receiving the light detecting signal LS and the strain detecting signal DS, and a processor for executing processing relating to the emission control signal C1, the reflection control signal C2, the light detecting signal LS, and the strain detecting signal DS. The processor may be implemented by an exclusive integrated circuit such as a microcontroller, an ASIC, an FPGA, or the like. The processor may be implemented by a general-purpose processor operating in conjunction with a general-purpose memory.

The light reflecting device 10 according to each of the above embodiments can be equipped in a lighting device 30 illustrated in FIG. 32. The lighting device 30 is a device configured to light a prescribed lighting area LA with visible light V. Components that are substantially the same as those of the lighting device 30 illustrated in FIG. 17 are assigned with the same reference numerals, and repetitive descriptions for those will be omitted.

The controller 32 is configured to receive a strain detecting signal DS from the strain gauge 17. The controller 32 is configured to detect strain generated in the light reflecting device 10 due to a thermal change of the environment based on the strain detecting signal DS, and to output a reflection control signal C4 for changing the attitude of the light reflecting member 11 so as to cancel the deviation in the traveling direction of the reflected light RL caused by the strain generated in the mirror face 111.

As a result, since it is possible to suppress the occurrence of a situation where the traveling direction of the light RL reflected by the mirror face 111 deviates from a desired direction due to a thermal change of the environment, it is also possible to suppress degradation in the accuracy as to the position and shape of the light distribution pattern P formed by the lighting device 30 using the mirror face 111.

The controller 32 having the above-described functions can be implemented by an input interface for receiving the strain detecting signal DS, an output interface for outputting the emission control signal C3 and the reflection control signal C4, and a processor for executing processing relating to the strain detecting signal DS, the emission control signal C3, and the reflection control signal C4. The processor may be implemented by an exclusive integrated circuit such as a microcontroller, an ASIC, an FPGA, or the like. The processor may be implemented by a general-purpose processor operating in conjunction with a general-purpose memory.

The sensor device 20 illustrated in FIG. 31 and the lighting device 30 illustrated in FIG. 32 may also be mounted on the vehicle 40 illustrated in FIG. 18. The vehicle 40 is an example of a mobile entity. In this example, at least one of the sensor device 20 and the lighting device 30 is mounted on a left front portion of the vehicle 40. The left front portion of the vehicle 40 is a portion located on the left of the center in the left-right direction of the vehicle 40 and ahead of the center in the front-rear direction of the vehicle 40. The sensing area SA of the sensor device 20 and the lighting area LA of the lighting device 30 are set outside the vehicle 40. The above-described non-lighting area UA is formed to suppress glare that may be imparted to an occupant of another vehicle or a pedestrian located in the lighting area LA.

In a case where both the sensor device 20 and the lighting device 30 are mounted on the vehicle 40, the light reflecting member 11 of the single light reflecting device 10 may be shared by the light emitting element 21 and the light receiving element 22 of the sensor device 20, as well as the light source 31 of the lighting device 30.

In a mobile entity such as the vehicle 40, a thermal change is likely to occur in the environment in which the light reflecting device 10 is disposed. Accordingly, the various advantages described above are more remarkable.

The above embodiments are merely illustrative to facilitate understanding of the presently disclosed subject matter. The configuration according to each of the above embodiments can be appropriately modified or improved without departing from the gist of the presently disclosed subject matter.

In each of the fifth to eighth embodiments, an optical fiber sensor may be used as an example of the strain sensor instead of the strain gauge 17 capable of obtaining the strain detecting signal DS with a simple configuration. The optical fiber sensor may employ a method of detecting reflected light by FBG (Fiber Bragg Grating) formed in an optical fiber, a method of detecting Rayleigh scattered light or Brillouin scattered light generated by glass particles forming an optical fiber, or the like. Since the configuration itself of the optical fiber sensor according to each method is well known, detailed descriptions thereof will be omitted.

Although it is necessary to individually prepare a light emitting element and a light receiving element for acquiring the strain detecting signal DS, since the optical fiber is light-weight and flexible, the disposition with respect to the light reflecting device 10 can be performed with higher flexibility. In addition, since the optical fiber is very thin, even if it is disposed on the surface of the light reflecting device 10, the appearance or the design of the cover is less influenced.

In each of the above embodiments, the displacement of at least one of the first arm member 121 and the second arm member 122 that are arranged side by side in the left-right direction enables the change in the light reflecting direction in a plane including the front-rear direction and the left-right direction. In addition, a pair of arm members may be provided so as to be arranged side by side in the up-down direction. By displacing at least one of the additional pair of arm members in a direction intersecting the mirror face 111 of the light reflecting member 11, it is also possible to change the light reflecting direction in a plane including the front-rear direction and the up-down direction. Alternatively, by providing an appropriate fulcrum on the light reflecting member 11, the light reflecting direction can be changed by the displacement of a single arm member.

The position of the vehicle 40 where at least one of the sensor device 20 and the lighting device 30 is disposed can be appropriately determined according to at least one of the sensing area SA and the lighting area LA that are prescribed, in addition to or instead of the example illustrated in FIG. 18.

The mobile entity on which at least one of the sensor device 20 and the lighting device 30 is mounted is not limited to the vehicle 40. Examples of other mobile entities include railways, flying objects, aircrafts, and ships. The mobile entity on which at least one of the sensor device 20 and the lighting device 30 is mounted may not require a driver.

At least one of the sensor device 20 and the lighting device 30 need not be mounted on a mobile entity. For example, the sensor device 20 is also applicable to a security system installed in a house or a facility for detecting an object that has entered a sensing area. The lighting device 30 is also applicable to a device for temporarily displaying a prescribed figure, character, marker, or the like on a specific road surface or wall surface.

The present application is based on Japanese Patent Application No. 2020-121504 filed on July 15, 2020, and Japanese Patent Application No. 2020-121505 filed on July 15, 2020.

## Claims

1. A light reflecting device (10C), comprising:
a light reflecting member (11) having a mirror face (111) adapted to reflect light;
an arm member (121, 122) bonded to the light reflecting member (11); and
an actuator (131, 132) configured to cause the arm member (121, 122) to displace in a direction intersecting the mirror face (111) to change an angle of the mirror face (111) relative to the light,
wherein the light reflecting member (11) has a thick portion (112a) at which a distance from the mirror face (111) is increased; and
wherein a side face intersecting one end face of the arm member (121, 122) in a longitudinal direction thereof is bonded to a side portion of the thick portion (112a).

2. The light reflecting device according to claim 1,
wherein a thermal expansion coefficient of a material forming the light reflecting member (11) is smaller than a thermal expansion coefficient of a material forming the arm member (121, 122).

3. A light reflecting device (10D), comprising:
a light reflecting member (11) having a mirror face (111) adapted to reflect light;
a supporting member (14) having a supporting face (141) that faces a back face (112) of the light reflecting member (11);
an arm member (121, 122) bonded to the supporting member (14); and
an actuator (131, 132) configured to cause the arm member (121, 122) to displace in a direction intersecting the mirror face (111) to change an angle of the mirror face (111) relative to the light,
wherein at least one of the back face (112) of the light reflecting member (11) and the supporting face (141) of the supporting member (14) has a protrusion (112c, 141a) protruding in a direction intersecting the mirror face (111); and
wherein the light reflecting member (11) and the supporting member (14) are bonded at the protrusion (112c, 141a).

4. The light reflecting member according to claim 3,
wherein the supporting member (14) has a thick portion (142a) at which a distance from the mirror face (111) is increased; and
wherein the supporting member (14) and the arm member (121, 122) are bonded at the thick portion (142a).

5. The light reflecting member according to claim 3 or 4,
wherein a thermal expansion coefficient of a material forming the light reflecting member (11) is smaller than at least one of a thermal expansion coefficient of a material forming the supporting member (14) and a thermal expansion coefficient of a material forming the arm member (121, 122).

6. The light reflecting member according to any one of claims 1 to 5,
wherein the actuator (131, 132) includes a piezoelectric element.

7. The light reflecting member according to claim 6,
wherein the arm member (121, 122) includes a piezoelectric element.

8. The light reflecting member according to any one of claims 1 to 7, further comprising:
a resin-molded portion (15) defining a space (S) allowing displacement of the light reflecting member (11) and the arm member (121, 122) while being hermetically sealed.

9. The light reflecting member according to claim 8,
wherein the space (S) is filled with inert gas.

10. The light reflecting member according to any one of claims 1 to 9,
wherein the mirror face (111) is adapted to reflect laser light.

11. A sensor device (20), comprising:
the light reflecting member (10) according to any one of claims 1 to 10;
a light emitting element (21) configured to emit non-visible light; and
a light receiving element (22) configured to output a light detecting signal (LS) corresponding to incident intensity of the non-visible light,
wherein the mirror face (111) of the light reflecting member (10) is configured to reflect the non-visible light emitted from the light emitted element (21) toward a sensing area (SA), and to reflect non-visible light reflected by an object (OB) situating in the sensing area (SA).

12. The sensor device according to claim 11, adapted to be mounted on a mobile entity (40).

13. A lighting device (30), comprising:
the light reflecting member (10) according to any one of claims 1 to 10; and
a light source (31) configured to emit visible light,
wherein the mirror face (111) of the light reflecting member (10) is configured to reflect the visible light toward a lighting area (LA).

14. The lighting device (30) according to claim 13, further comprising:
a light emitting element (21) configured to emit non-visible light; and
a light receiving element (22) configured to output a light detecting signal (LS) corresponding to incident intensity of the non-visible light,
wherein the mirror face (111) of the light reflecting member (10) is configured to reflect the non-visible light emitted from the light emitted element (21) toward a sensing area (SA), and to reflect non-visible light reflected by an object (OB) situating in the sensing area (SA).

## Patentansprüche

1. Lichtreflektierende Vorrichtung (10C), umfassend:
ein lichtreflektierendes Element (11), das eine Spiegelfläche (111) aufweist, die angepasst ist, um Licht zu reflektieren;
ein Armelement (121, 122), das mit dem lichtreflektierenden Element (11) verbunden ist; und
einen Aktuator (131, 132), der konfiguriert ist, um das Armelement (121, 122) zu veranlassen, sich in eine Richtung zu bewegen, die die Spiegelfläche (111) schneidet, um einen Winkel der Spiegelfläche (111) in Bezug auf das Licht zu ändern,
wobei das lichtreflektierende Element (11) einen dicken Abschnitt (112a) aufweist, an dem ein Abstand von der Spiegelfläche (111) vergrößert ist; und
wobei eine Seitenfläche, die eine Endfläche des Armelements (121, 122) in einer Längsrichtung davon schneidet, mit einem Seitenabschnitt des dicken Abschnitts (112a) verbunden ist.

2. Lichtreflektierende Vorrichtung nach Anspruch 1,
wobei ein Wärmeausdehnungskoeffizient eines Materials, das das lichtreflektierende Element (11) bildet, kleiner ist als ein Wärmeausdehnungskoeffizient eines Materials, das das Armelement (121, 122) bildet.

3. Lichtreflektierende Vorrichtung (10D), umfassend:
ein lichtreflektierendes Element (11), das eine Spiegelfläche (111) aufweist, die angepasst ist, um Licht zu reflektieren;
ein Stützelement (14), das eine Stützfläche (141) aufweist, die einer Rückseite (112) des lichtreflektierenden Elements (11) zugewandt ist;
ein Armelement (121, 122), das mit dem Stützelement (14) verbunden ist; und
einen Aktuator (131, 132), der konfiguriert ist, um das Armelement (121, 122) zu veranlassen, sich in eine Richtung zu bewegen, die die Spiegelfläche (111) schneidet, um einen Winkel der Spiegelfläche (111) in Bezug auf das Licht zu ändern,
wobei mindestens eine von der Rückseite (112) des lichtreflektierenden Elements (11) und der Stützfläche (141) des Stützelements (14) einen Vorsprung (112c, 141a) aufweist, der in einer Richtung hervorsteht, die die Spiegelfläche (111) schneidet; und
wobei das lichtreflektierende Element (11) und das Stützelement (14) an dem Vorsprung (112c, 141a) verbunden sind.

4. Lichtreflektierendes Element nach Anspruch 3,
wobei das Stützelement (14) einen dicken Abschnitt (142a) aufweist, an dem ein Abstand von der Spiegelfläche (111) vergrößert ist; und
wobei das Stützelement (14) und das Armelement (121, 122) an dem dicken Abschnitt (142a) miteinander verbunden sind.

5. Lichtreflektierendes Element nach Anspruch 3 oder 4,
wobei ein Wärmeausdehnungskoeffizient eines Materials, das das lichtreflektierende Element (11) bildet, kleiner ist als mindestens einer von einem Wärmeausdehnungskoeffizienten eines Materials, das das Stützelement (14) bildet, und einem Wärmeausdehnungskoeffizienten eines Materials, das das Armelement (121, 122) bildet.

6. Lichtreflektierendes Element nach einem der Ansprüche 1 bis 5,
wobei der Aktuator (131, 132) ein piezoelektrisches Element beinhaltet.

7. Lichtreflektierendes Element nach Anspruch 6,
wobei das Armelement (121, 122) ein piezoelektrisches Element beinhaltet.

8. Lichtreflektierendes Element nach einem der Ansprüche 1 bis 7, ferner umfassend:
einen harzgegossenen Abschnitt (15), der einen Raum (S) definiert, der eine Bewegung des lichtreflektierenden Elements (11) und des Armelements (121, 122) zulässt, während er hermetisch abgedichtet ist.

9. Lichtreflektierendes Element nach Anspruch 8, wobei der Raum (S) mit Inertgas gefüllt ist.

10. Lichtreflektierendes Element nach einem der Ansprüche 1 bis 9, wobei die Spiegelfläche (111) angepasst ist, um Laserlicht zu reflektieren.

11. Sensorvorrichtung (20), umfassend:
das lichtreflektierende Element (10) nach einem der Ansprüche 1 bis 10;
ein lichtemittierendes Element (21), das konfiguriert ist, um nicht sichtbares Licht zu emittieren; und
ein lichtempfangendes Element (22), das konfiguriert ist, um ein Lichterfassungssignal (LS) auszugeben, das einer einfallenden Intensität des nicht sichtbaren Lichts entspricht,
wobei die Spiegelfläche (111) des lichtreflektierenden Elements (10) konfiguriert ist, um das von dem lichtemittierenden Element (21) emittierte nicht sichtbare Licht in Richtung eines Erfassungsbereichs (SA) zu reflektieren und um nicht sichtbares Licht zu reflektieren, das von einem Objekt (OB) reflektiert wird, das sich in dem Erfassungsbereich (SA) befindet.

12. Sensorvorrichtung nach Anspruch 11, die angepasst ist, um an einer mobilen Einheit (40) montiert zu werden.

13. Beleuchtungsvorrichtung (30), umfassend:
das lichtreflektierende Element (10) nach einem der Ansprüche 1 bis 10; und
eine Lichtquelle (31), die konfiguriert ist, um sichtbares Licht zu emittieren,
wobei die Spiegelfläche (111) des lichtreflektierenden Elements (10) konfiguriert ist, um das sichtbare Licht in Richtung eines Beleuchtungsbereichs (LA) zu reflektieren.

14. Beleuchtungsvorrichtung (30) nach Anspruch 13, die ferner umfasst:
ein lichtemittierendes Element (21), das konfiguriert ist, um nicht sichtbares Licht zu emittieren; und
ein lichtempfangendes Element (22), das konfiguriert ist, um ein Lichterfassungssignal (LS) auszugeben, das einer einfallenden Intensität des nicht sichtbaren Lichts entspricht,
wobei die Spiegelfläche (111) des lichtreflektierenden Elements (10) konfiguriert ist, um das von dem lichtemittierenden Element (21) emittierte nicht sichtbare Licht in Richtung eines Erfassungsbereichs (SA) zu reflektieren und um nicht sichtbares Licht zu reflektieren, das von einem Objekt (OB) reflektiert wird, das sich in dem Erfassungsbereich (SA) befindet.

## Revendications

1. Dispositif de réflexion de lumière (10C), comprenant :
un élément de réflexion de lumière (11) présentant une face de miroir (111) adaptée pour réfléchir la lumière ;
un élément bras (121, 122) relié à l'élément de réflexion de lumière (11) ; et
un actionneur (131, 132) configuré pour amener l'élément bras (121, 122) à se déplacer dans une direction croisant la face de miroir (111) pour changer un angle de la face de miroir (111) par rapport à la lumière,
dans lequel l'élément de réflexion de lumière (11) présente une partie épaisse (112a) au niveau de laquelle une distance depuis la face de miroir (111) est accrue ; et
dans lequel une face latérale croisant une face d'extrémité de l'élément bras (121, 122) dans une direction longitudinale de celui-ci est reliée à une partie latérale de la partie épaisse (112a).

2. Dispositif de réflexion de lumière selon la revendication 1,
dans lequel un coefficient de dilatation thermique d'un matériau constituant l'élément de réflexion de lumière (11) est inférieur à un coefficient de dilatation thermique d'un matériau constituant l'élément bras (121, 122).

3. Dispositif de réflexion de lumière (10D) comprenant :
un élément de réflexion de lumière (11) présentant une face de miroir (111) adaptée pour réfléchir la lumière ;
un élément de support (14) présentant une face de support (141) qui fait face à une face arrière (112) de l'élément de réflexion de lumière (11) ;
un élément bras (121, 122) relié à l'élément de support (14) ; et
un actionneur (131, 132) configuré pour amener l'élément bras (121, 122) à se déplacer dans une direction croisant la face de miroir (111) pour changer un angle de la face de miroir (111) par rapport à la lumière,
dans lequel au moins l'une de la face arrière (112) de l'élément de réflexion de lumière (11) et de la face de support (141) de l'élément de support (14) présente une saillie (112c, 141a) faisant saillie dans une direction croisant la face de miroir (111) ; et
dans lequel l'élément de réflexion de lumière (11) et l'élément de support (14) sont reliés au niveau de la saillie (112c, 141a).

4. Élément de réflexion de lumière selon la revendication 3,
dans lequel l'élément de support (14) présente une partie épaisse (142a) au niveau de laquelle une distance depuis la face de miroir (111) est accrue ; et
dans lequel l'élément de support (14) et l'élément bras (121, 122) sont reliés au niveau de la partie épaisse (142a).

5. Élément de réflexion de lumière selon la revendication 3 ou 4,
dans lequel un coefficient de dilatation thermique d'un matériau constituant l'élément de réflexion de lumière (11) est inférieur à au moins un d'un coefficient de dilatation thermique d'un matériau constituant l'élément de support (14) et d'un coefficient de dilatation thermique d'un matériau constituant l'élément bras (121, 122).

6. Élément de réflexion de lumière selon l'une quelconque des revendications 1 à 5,
dans lequel l'actionneur (131, 132) inclut un élément piézoélectrique.

7. Élément de réflexion de lumière selon la revendication 6,
dans lequel l'élément bras (121, 122) inclut un élément piézoélectrique.

8. Élément de réflexion de lumière selon l'une quelconque des revendications 1 à 7, comprenant en outre :
une partie moulée en résine (15) définissant un espace (S) permettant le déplacement de l'élément de réflexion de lumière (11) et de l'élément bras (121, 122) tout en étant hermétiquement scellé.

9. Élément de réflexion de lumière selon la revendication 8,
dans lequel l'espace (S) est rempli de gaz inerte.

10. Élément de réflexion de lumière selon l'une quelconque des revendications 1 à 9,
dans lequel la face de miroir (111) est adaptée pour réfléchir une lumière laser.

11. Dispositif de détection (20), comprenant :
l'élément de réflexion de lumière (10) selon l'une quelconque des revendications 1 à 10 ;
un élément émetteur de lumière (21) configuré pour émettre de la lumière non visible ; et
un élément récepteur de lumière (22) configuré pour délivrer en sortie un signal de détection de lumière (LS) correspondant à l'intensité incidente de la lumière non visible,
dans lequel la face de miroir (111) de l'élément de réflexion de lumière (10) est configurée pour réfléchir la lumière non visible émise à partir de l'élément émetteur de lumière (21) vers une zone de détection (SA), et pour réfléchir la lumière non visible réfléchie par un objet (OB) situé dans la zone de détection (SA).

12. Dispositif de détection selon la revendication 11, adapté pour être monté sur une entité mobile (40).

13. Dispositif d'éclairage (30), comprenant :
l'élément de réflexion de lumière (10) selon l'une quelconque des revendications 1 à 10 ; et
une source de lumière (31) configurée pour émettre de la lumière visible,
dans lequel la face de miroir (111) de l'élément de réflexion de lumière (10) est configurée pour réfléchir la lumière visible vers une zone d'éclairage (LA).

14. Dispositif d'éclairage (30) selon la revendication 13, comprenant en outre :
un élément émetteur de lumière (21) configuré pour émettre de la lumière non visible ; et
un élément récepteur de lumière (22) configuré pour délivrer en sortie un signal de détection de lumière (LS) correspondant à l'intensité incidente de la lumière non visible,
dans lequel la face de miroir (111) de l'élément de réflexion de lumière (10) est configurée pour réfléchir la lumière non visible émise à partir de l'élément émetteur de lumière (21) vers une zone de détection (SA), et pour réfléchir la lumière non visible réfléchie par un objet (OB) situé dans la zone de détection (SA).
